# EUROPEAN PATENT APPLICATION

(11) **EP 1 746 062 A2**
(43) Date of publication of application: **24.01.2007**
(21) Application number: 06012783.4
(22) Date of filing: 21.06.2006
(51) Int. Cl.: B66C 1/00, B66C 3/00

(54) **Suspension arrangement with swing damper and method of damping thereof**

(30) Priority: 22.06.2005 LV 050073
(71) Applicant: BALTROTORS, SIA, Rigas raj. LV-2169 (LV)
(72) Inventor: Darznieks, Vilis, 1009 Riga (LV); Martinsons, Andris, 2169 Salaspils (LV)
(74) Representative: Zvirgzds, Arnolds

(57) **Abstract**

The invention relates to the field of mechanical devices and methods intended for braking or damping the pendular movement, for instance, it relates to suspension arrangements connecting the arm of crane with rotator, about which the swinging movement is accomplished by the suspension arrangement. The aim of invention is to increase reliability, service life and to improve service quality of suspension arrangement. The arrangement contains suspension (1) with a slot wherein the crankcase block is located. The crankcase block includes two covers (2) and central figurative insert (3) with hub (6) that is mounted on grooves of sleeve (10). The hub is provided with blade wherein a damping hole (a) is made. The covers (2) are located movable with a possibility to accomplish swinging-rotating movement on diametrical protrusions of the hub (6). The central insert (3) is provided with outer protrusions (b) being in engagement with the surface (c) of rotator in running order. The suspension (1) is mounted on an axle (14) stationary connected with rotator (15); the axle passes through internal hole of sleeve (10).

## Description

The invention relates to the field of mechanical devices and methods intended for use in braking and damping the swinging or pendular movement.

Swinging movement normally occurs at working conditions of pivotal links, for instance, of suspension arrangements connecting crane arm with work tools: grapple, gripper etc. Usually a rotator is located between a work tool and suspension arrangement. The rotator is intended for rotation and driving of the mentioned work tools.

Practicaly all braking arrangements or swing dampers of prior art are located on the corresponding suspension and carrying out braking movement with respect to crane in one direction as well as respect to rotator in perpendicular direction or separately in each direction.

It is known arrangement and method of damping of swing movement of prior art, for instance, from the description to the international patent application No W00073195, IPC⁷ B66C3/00, 2000. The swing damper of prior art has an upper part that is connected to the crane jib, and a lower part that is carrying a work tool via rotator. The upper part and the lower part are pivotally interconnected via a slewing joint. A brake arrangement is included in the swing damper in the form of a male-female-cone arrangement. The arrangement and method of damping swing movement characterizes by that the damping effect is created owing to engagement of conical surfaces wherein the conical surfaces also function as load bearing surfaces.

Disadvantage of the arrangement of prior art is bound with that in certain cases the braking action is not sufficient. Therefore in order to attain the maximum braking effect it is needed to increase the length of cone of breaking element. In result it brings to an unavoidable necessity to increase the cylindrical cantilever, to diminish the work load-bearing cross-section of suspension for all modes of tangent and normal forces.

The mentioned disadvantage is partially obviated by other prior art design of suspension arrangement including brake arrangement according to description of USA patent No. 6264013, IPC⁷ F16D55/08, B66C3/00, 2001 (prototype), wherein the method of braking is realized by using of conical braking pair.

Movable conical elements are made on two sides of suspension with possibility to be in engagement by one part of conical elements with rotator or crane movable with respect to suspension, and by other part of conical elements with corresponding conical friction elements immovably fixed on suspension and forming cantilever of suspension in the shape of cone with increased surface of engagement.

Also this prior art suspension arrangement and method of damping has several disadvantages. Common disadvantage of prior art arrangements is such that braking effect is realized by mechanical interaction of friction materials by means of retaining by force movable with respect to rotor and immovable with respect to suspension flat or conical surfaces. Essential disadvantage of prior art braking method is wearing of engaged surfaces and the necessity to make regulation operations and periodical replacement of friction elements, but in case of ingress of oil, if only dry friction is used, the brake arrangement practically ceases to operate.

The present invention has for its object to increase reliability, service life and to improve service quality of suspension arrangement.

In conformity of invention there is provided a suspension arrangement with a swing damper, including an axle, connecting the suspension arrangement to a crane and rotator, about which the suspension arrangement accomplishes the swinging movement, and brake arrangement. According to the invention the suspension arrangement is characterised by that brake arrangement is realized in the form of crankcase block, that is furnished with a closed inside cavity for hydraulic fluid divided at least in two parts by separating means that are provided with a damping hole; the said crankcase block is provided with two interconnected covers and separating means in the form of a central figurative insert, inside part of which is located on a hub fixed on a sleeve and provided with a blade dividing the said closed inside cavity at least in two cavities; the said blade is provided with the said damping hole.

The said suspension arrangement is provided with a slot wherein is located the said crankcase block in grooves of sleeve; the said slot is prolonged in the form of splined connection through a lug of suspension arrangement to provide immovable connection between suspension arrangement and hub; the said covers are mounted on diametrical protrusions of hub in a such manner that the said covers together with the central insert and a rotator, surface of which is engaged with the outside surface of the insert, are able to carry out the swinging- rotation movement..
Moreover, the safety valves connected to hydraulic channels are mounted in the casing of crankcase block to limit the beginnings of maximum pressure in casing unit.

According to the invention the method of damping of swing movement of suspension arrangement with an axle connecting suspension arrangement with crane and rotator, about which the suspension arrangement accomplishes the swinging movement, including braking of swinging movement by means of a brake arrangement, is characterised by that the braking is effected by means of hydraulic device implemented in the form of crankcase block that is furnished with a closed inside cavity for hydraulic fluid wherein the said closed inside cavity is divided at least in two cavities by separating means provided with a damping hole, but braking effect is created owing to change of velocity and hydraulic force resulting from displacement of hydraulic fluid from one closed cavity into other through damping hole made in the blade of the said hub meanwhile when the said suspension arrangement, interconnected sleeve and hub accomplish the swinging movement with respect to the rotator.

Moreover damping of swinging movement is realized in a such manner that the crankcase block being in engagement by its outside surface with the surface of rotator accomplishes together with the rotator the swinging movement during the process of which the blade of hub moves with respect to radial and lateral surfaces of cavities, forcing the fluid to move through the damping hole from one cavity into other on dependence of velocity and force of movement, whereas the limitation of the beginnings of maximum pressure in crankcase block is effected by means of security valves mounted in the casing of the said block.

The invention is illustrated by the accompanying drawings, where on Fig. 1 is shown the connection of suspension arrangement with swing damper in cross section; on Fig. 2 - in lengthwise section; on Fig 3 - general axonometric view of suspension arrangement with swing damper for connection with rotator. The places of connection with crane arm are not shown, since the mentioned connections are analogous, differing only by the right angle disposition.

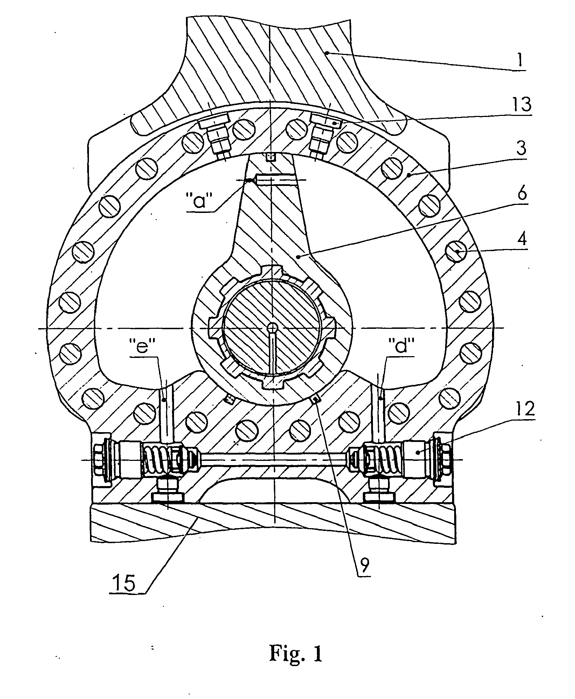

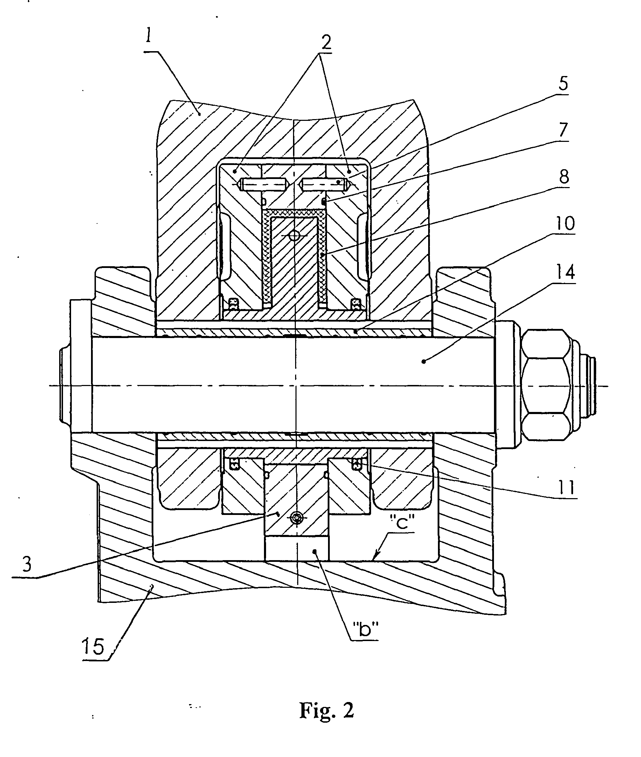

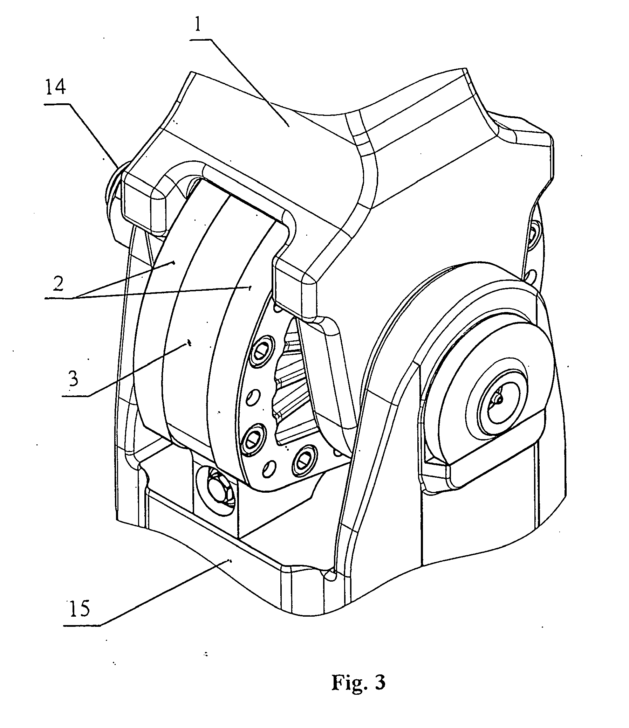

Arrangement includes a suspension 1 that is provided with a slot wherein a swing damper at once is located (Fig. 1, 2, 3). Swing damper includes a crankcase block containing two covers 2 and a central figurative insert 3 interconnected together by means of screws 4 and pins 5 and hub 6. The said hub 6 is located inside of cavity of crankcase block and provided with a blade, wherein a damping hole "*a*" is made. In order to ensure the leak-proofness between covers 2 and central insert 3 there are mounted seals 7, but between hub 6 and surfaces of crankcase block are mounted seals 8 and 9.
The hub 6 is located in grooves of sleeve 10 wherein the said slot is prolonged in the form of splined connection through the lugs of suspension arrangement 1 to ensure immovable connection between suspension arrangement 1 and hub 6. The said covers are mounted on diametrical protrusions of hub 6 in a such manner on two sides provided with seals 11 so that the said covers 2 are able to carry out the swinging - rotation movement. The central insert 3 has outer protrusions "*b*" being engaged during running order with surface of rotator "*c*". In the casing of the central insert 3 there are screwed up two safety valves 12 adjusted to maximum authorized pressure so that it could be released via hydraulic channels "*d*" and "*e*" in corresponding cavities of the crankcase block; there also two plugs 13 for filling up the cavity of crankcase block with hydraulic fluid. During assembling operation with rotator 15 when suspension arrangement 1 is placed on axle 14 immovably connected with rotator 15 and passing through internal hole of sleeve 10 serving also as a plain bearing relatively to axle 14; the said sleeve is provided with the corresponding oil grooves.

The method of damping of suspension arrangement 1 is characterized by that the braking and damping of swing movements are effected by means of hydraulic device - crankcase block and braking effect is created owing to change of velocity and hydraulic force resulting from displacement of hydraulic fluid from one closed cavity into other through damping hole made in the blade of hub 6.

During the running order the said suspension arrangement 1 and hub 6 have a possibility to accomplish the swinging- rotation movement relatively to the rotator 15 with suspended work tools. At the same time crankcase block being engaged with rotator 15 by the central insert 3, makes rotation movement together with rotator 15, accomplishing movement of crankcase block relatively to the blade of hub 6 and relatively to the interior surfaces of crankcase block displacing hydraulic fluid from one cavity to other through damping hole "*a*", creating braking force owing to originating of counter-pressure and exerting damping action to complete process of swinging of suspended tools on dependence of velocity and force of movement.

Technical features of the offered suspension arrangement with hydraulic swing damper eliminates the necessity to use the additional friction braking arrangements allowing to increase reliability and service life, and also improve service quality of suspension arrangement with swing damper.

Suspension arrangement with swing damper according to invention can be used in arrangements for damping of swing movements of suspended tools, especially, in suspension arrangements joining crane arm with work tools by means of rotators. The all parts used of the offered arrangement can be produced by industrial methods of prior art.

## Claims

1. A suspension arrangement with a swing damper, including an axle, connecting the suspension arrangement to a crane and rotator (15), about which the suspension arrangement accomplishes the swinging movement, and brake arrangement, **characterized in that** with the aim to increase reliability, service life and improve service quality of suspension arrangement, brake arrangement is realized in the form of crankcase block that is furnished with a closed inside cavity for hydraulic fluid wherein the said inside cavity is divided at least in two cavities by separating means provided with a damping hole ("*a*").

2. A suspension arrangement with a swing damper according to Claim 1, **characterized in that** the said crankcase block is provided with two interconnected covers (2) and separating means in the form of a central figurative insert (3), inside part of which is located on a hub (6), wherein the said hub is fixed on a sleeve (10) and provided with a blade dividing the said cavity in two parts or cavities; the said blade is provided with the said damping hole ("*a*").

3. A suspension arrangement with a swing damper according to Claim 1 or 2, **characterized in that** the said suspension arrangement (1) is provided with a slot wherein in grooves of sleeve is located the said crankcase block; the said slot is prolonged in the form of splined connection through lugs of suspension arrangement to provide an immovable connection between suspension arrangement (1) and hub (6).

4. A suspension arrangement with a swing damper according to any of preceding Claims, **characterized in that** the said covers (2) are mounted on diametrical protrusions of the said hub (6) in a such manner that the said covers together with the central insert (3) and a rotator (15), surface of which is engaged with the outer surface of the said insert, are able to carry out the swinging- rotation movement.

5. A suspension arrangement with a swing damper according to any of preceding Claims, **characterized in that** the safety valves (12) connected to hydraulic channels are mounted in the casing of crankcase block to limit the beginnings of maximum pressure in the said crankcase block.

6. A method of damping of a suspension arrangement with an axle connecting suspension arrangement with crane and rotator, about which the suspension arrangement accomplishes the swinging movement, including braking of swinging movement by means of a brake arrangement, **characterized in that** the braking is effected by means of hydraulic device implemented in the form of crankcase block that is furnished with a closed inside cavity for hydraulic fluid divided at least in two cavities by separating means that are provided with a damping hole ("*a*").

7. A method of damping a suspension arrangement according to Claim 6, **characterized by** creating of braking effect owing to change of velocity and hydraulic force resulting from displacement of hydraulic fluid from one closed cavity into other through the said damping hole made in the blade of hub (6) meanwhile when the said suspension arrangement and interconnected sleeve (10) and hub (6) accomplish the swinging movement with respect to the rotator (15).

8. A method of damping a suspension arrangement according to Claim 6 or 7, **characterized by** damping of swinging movements in such manner that the crankcase block being in engagement by its outside surface with the surface of rotator (15) accomplishes together with the rotator the swinging movement during the process of which the said blade of hub (6) moves with respect to radial and lateral surfaces, forcing the fluid to move through the damping hole from one cavity into other on dependence of velocity and force of movement.

9. A method of damping a suspension arrangement according to Claim 6 or 7, **characterized by** limitation the beginnings of maximum pressure in crankcase block by means of security valves mounted in the casing of crankcase block..
